# EUROPEAN PATENT SPECIFICATION

(11) **EP 4 344 915 B1**
(45) Date of publication and mention of the grant of the patent: **01.04.2026**
(21) Application number: 22198356.2
(22) Date of filing: 28.09.2022
(51) Int. Cl.: B60H 1/32, F24F 13/22, B60H 1/26, B60H 1/28, B60H 1/00

(54) **AN AIR INTAKE DEVICE**
LUFTEINLASSVORRICHTUNG
DISPOSITIF D'ADMISSION D'AIR

(43) Date of publication of application: 03.04.2024
(73) Proprietor: Ningbo Geely Automobile Research & Development Co. Ltd., Hangzhou Bay New District Ningbo Zhejiang 315336 (CN); Zhejiang Geely Holding Group Co., Ltd., Hangzhou, Zhejiang 310051 (CN)
(72) Inventor: ANDREASSON, Patrik, 45933 Ljungskile (SE); KARLSSON, Anders, 42656 Västra Frölunda (SE); FRIBERG, Henrik, 43342 Partille (SE); LEVIN, Johan, 50454 Borås (SE)
(74) Representative: Zacco Sweden AB

(56) References cited:
- EP-A2- 2 236 332
- CN-A- 107 042 742
- DE-A1- 102020 131 659
- DE-B3- 102004 051 198
- DE-C1- 4 303 663
- FR-A1- 2 938 213

## Description

### TECHNICAL FIELD

The invention relates to an air intake device and a vehicle.

### BACKGROUND

Today's HVAC (Heating Ventilation Air Conditioning) systems of vehicles require increased air volumes at the same time as the packing space available for arranging an air intake device is limited. The air quality has to be secured which means that no water is allowed to reach the HVAC system.

On one hand, any water, such as rainwater, in the air reaching the air intake device, has to be separated from the air before providing the air to the HVAC system, and on the other hand, any means for removing the water should not cause air pressure drops in the air intake device that will negatively affect the performance of the HVAC system.

Document DE4303663 describes an air intake device for a motor vehicle. The air intake device comprises a baffle plate having a water channel and a wire mesh arranged on a wall, for water separation from the air flowing in a drainage channel and further to an air conditioning system.

### SUMMARY

An objective of the invention is to provide an air intake device for providing air to an air conditioning system of a vehicle, by which air intake device, water can be removed at the same time as the air pressure drop is kept to a minimum not adversely affecting the air conditioning system.

The objective is achieved by an air intake device according to claim 1.

The invention is based on the insight that by such an air intake device, water can be removed in an efficient way while minimizing the air pressure drop. Any water in the air flowing through the drainage container will be separated from the air in the drainage container. The drainage container preferably has a water drainage valve arranged in the bottom of the drainage container for removing the water collected in the drainage container. The air is forced to flow upward before leaving the drainage container, and thereby, due to gravity, water is separated from the airflow.

According to one embodiment of the air intake device, the angle α is in the interval 140°<α<220°, preferably in the interval 160°<α<200°, and more preferably in the interval 170°<α<190°.

The airflow direction of the inlet and the airflow direction of the outlet are the main directions of the airflow directed into the drainage container and out from the drainage container, respectively.

According to a further embodiment, the airflow direction of the outlet is opposite to the airflow direction of the inlet. In other words; α is 180° and the air will be redirected 180° when passing through the drainage container. Hereby, any water of the air can be removed in a very efficient way.

According to a further embodiment, the air intake device has a pipe portion arranged at the outlet inside the drainage container, which pipe portion encloses the outlet, and preferably the pipe portion is an end portion of the second duct part, which end portion extends into the drainage container and ends inside the drainage container. Hereby, any water on the inside surface of the drainage container is prevented or counteracted from following the airflow out from the drainage container. Further, by using the end portion of the second duct part, no additional component has to be used.

According to a further embodiment, the inlet and the outlet are arranged on one and the same side of the drainage container. Hereby, the inlet and the outlet can be positioned close to each other which can be favourable when the packing space is limited, and the inlet and the outlet can be arranged such that an angle a=180° is achieved for redirecting the airflow correspondingly.

According to a further embodiment, the first duct part has at least one internal guiding vane arranged to counteract swirling of the air before entering the drainage container. Hereby, the airflow is more homogenous and less turbulent when reaching the drainage container which improves the separation of water from the air inside the drainage container.

According to a further embodiment, said at least one guiding vane extends in a longitudinal direction of the first duct part and divides the first duct part into a plurality of longitudinal air channels. Hereby, the air will be divided and transported in the air channels which reduces swirl tendency.

According to a further aspect, the invention relates to a vehicle comprising an air intake device as described herein. The advantages of the vehicle are substantially the same as the advantages already discussed hereinabove with reference to the different embodiments of the air intake device.

According to one embodiment of the vehicle, the air intake device comprises two of said duct arranged for transporting air from the collecting component to the air conditioning system, and two of said drainage container, wherein each drainage container is arranged at a respective side of the vehicle for drainage of water at a respective front wheel arch of the vehicle. Hereby, the performance of the air intake device can be improved at the same time as the packing space available can be utilized in good way.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1A is a schematic cut view of an air intake device,
Fig. 1B is a cross section view taken along B-B in Fig. 1A,
Fig. 2 shows a variant of the air intake device,
Fig. 3A is a perspective view of a further variant of the air intake device,
Fig. 3B is a cut view from below of the air intake device in Fig. 3A, and
Fig. 4 is a schematic view of a vehicle with the air intake device shown in Fig. 3A installed.

### DETAILED DESCRIPTION OF EXAMPLE EMBODIMENTS

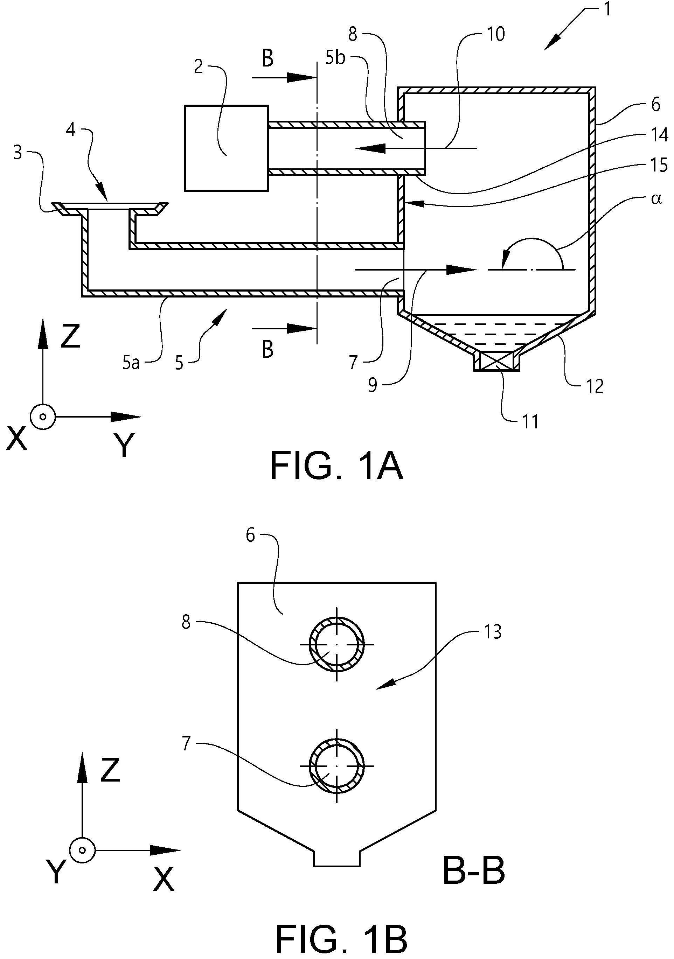

Fig. 1A is a cut view of an air intake device 1 for providing air to an air conditioning system or HVAC 2 (schematically indicated) of a vehicle. The air intake device 1 comprises a collecting component 3 with an opening 4 for receiving air, a duct 5 arranged for transporting air from the collecting component 3 to the air conditioning system 2, and a drainage container 6. The duct 5 is suitably closed, preferably along the entire extension from the collecting component 3 to the air conditioning system 2. The drainage container 6 is also closed against the surrounding.

Further, the duct 5 has a first duct part 5a extending from the collecting component 3 to an inlet 7 of the drainage container 6, which allows air to flow from the collecting component 3 and into the drainage container 6, and a second duct part 5b extending from an outlet 8 of the drainage container 6 to the air conditioning system 2, which allows air to flow out from the drainage container 6 and to the air conditioning system 2.

The inlet 7 and the outlet 8 are arranged such that an airflow direction 9 of the inlet 7 and an airflow direction 10 of the outlet 8 form an angle α in the interval 90°≤α≤270° relative to each other, thereby redirecting the airflow in the drainage container 6. The inlet airflow direction 9 and the outlet airflow direction 10 are the main directions of the airflow into and out from the drainage container 6, respectively.

In the example embodiment illustrated in Fig. 1A, the angle α is 180° between the airflow direction 9 of the inlet 7 and the airflow direction 10 of the outlet 8. In other words; the inlet 7 and the outlet 8 are arranged such that the airflow direction 10 of the outlet 8 is opposite to the airflow direction 9 of the inlet 7.

A cartesian coordinate system X, Y, Z, where all axes are orthogonal to each other, is introduced in Fig. 1A for facilitating the explanation of the air intake device 1.

When the air intake device has its intended orientation, such as properly installed in a vehicle, the outlet 8 is arranged above the inlet 7, i.e. at a higher position on the vertical axis Z. Further, the drainage container 6 has a water drainage valve 11 arranged in the bottom 12 of the drainage container 6, and suitably the drainage valve 11 is arranged below the inlet 7, i.e. at a lower position on the vertical axis Z.

The inlet 7 and the outlet 8 can be arranged on one and the same side 13 of the drainage container 6, and suitably at substantially same position along the X-axis. In Fig. 1B showing a cross section view taken along B-B in Fig. 1A, it is shown that the inlet 7 and the outlet 8 are arranged at one and the same side 13 of the drainage container 6 and at the same X-axis position.

The example embodiment of the air intake device 1 illustrated in Fig. 1A has a pipe portion 14 arranged at the outlet 8 inside the drainage container 6, which pipe portion 14 encloses the outlet 8, i.e. the pipe portion 14 extends circumferentially around the outlet. The pipe portion 14 projects from an inside surface 15 of the drainage container 6 into the drainage container 6 and constitutes a collar extending around the outlet opening.

The pipe portion 14 is suitably an end portion of the second duct part 5b or an extension thereof, which end portion extends into the drainage container 6 and ends inside the drainage container 6.

Optionally, the pipe portion 14 or collar arranged at the outlet 8 is a separate pipe portion attached to the inside surface 15. Such a pipe portion may have substantially the same dimensions as the outlet 8. For example, in case the outlet and the pipe portion both have circular cross sections, the inner diameter of the pipe portion can be equal to or somewhat greater than the diameter of the outlet opening.

In the same way as described with respect to the outlet 8 hereinabove, the air intake device 1 can have a pipe portion (not shown in Fig. 1A) arranged at the inlet 7 inside the drainage container 6, which pipe portion encloses the inlet 7, i.e. the pipe portion extends circumferentially around the inlet. The pipe portion can project from an inside surface 15 of the drainage container 6 into the drainage container 6 and constitute a collar extending around the inlet opening.

The pipe portion is suitably an end portion of the first duct part 5a or an extension thereof, which end portion extends into the drainage container 6 and ends inside the drainage container 6.

Optionally, the pipe portion or collar arranged at the inlet 7 is a separate pipe portion attached to the inside surface 15. Such a pipe portion may have substantially the same dimensions as the inlet 7. For example, in case the inlet and the pipe portion both have circular cross sections, the inner diameter of the pipe portion can be equal to or somewhat greater than the diameter of the inlet opening.

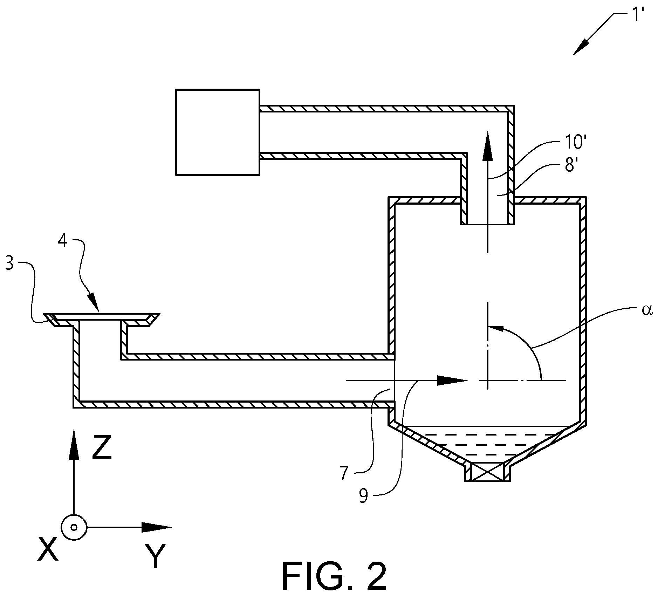

Fig. 2 shows a variant of the air intake device 1' where the inlet 7 and the outlet 8' are arranged such that the angle α formed between the airflow direction 9 of the inlet 7 and the airflow direction 10' of the outlet 8' is 90° for redirecting the airflow in the drainage container 6 correspondingly.

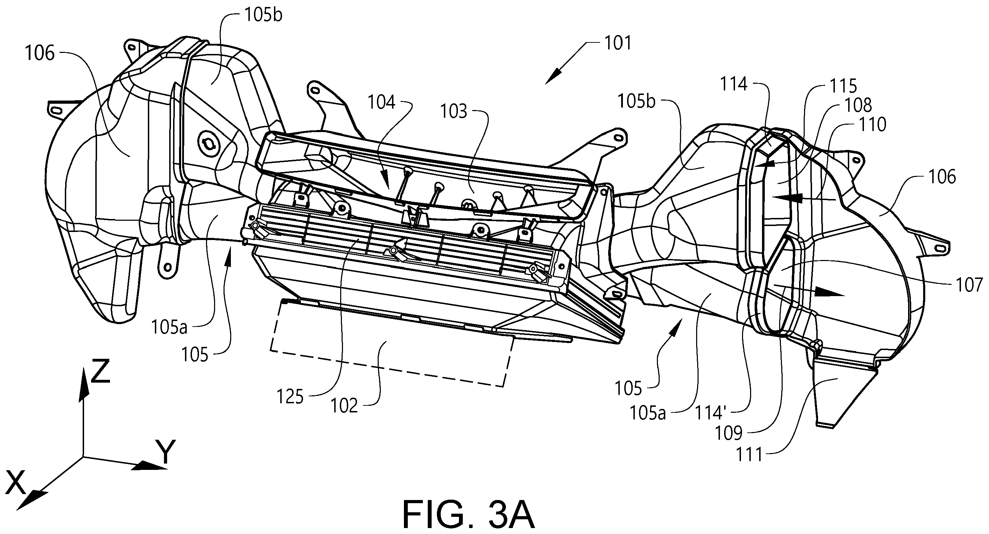

Fig. 3A shows a further variant of the air intake device 101 where the device comprises two of said duct 105 arranged for transporting air from the collecting component 103 to the air conditioning system or HVAC 102 (schematically indicated) and two of said drainage container 106. Further, an air filter 125 is suitably arranged downstream the drainage containers 106 and upstream the air conditioning system 102.

For each drainage container, the first duct part 105a extends from the collecting component 103 to the inlet 107 of the drainage container 106, which allows air to flow from the collecting component 103 and into the drainage container 106, and the second duct part 105b extends from the outlet 108 of the drainage container 106 to the air conditioning system 102, which allows air to flow out from the drainage container 106 and to the air conditioning system 102.

In the same way as explained with reference to the example embodiment illustrated in Fig. 1A, also in this example embodiment illustrated in Fig. 3A, the angle α is approximately 180° between the airflow direction 109 of the inlet 107 and the airflow direction 110 of the outlet 108. In other words; the inlet 107 and the outlet 108 are arranged such that the airflow direction 110 of the outlet 108 is opposite to the airflow direction 109 of the inlet 107.

As appears from the partly cut view in Fig. 3A, the pipe portion 114 arranged at the outlet 108 inside the drainage container 106 encloses the outlet 108, i.e. the pipe portion 114 extends circumferentially around the outlet. The pipe portion 114 is the end portion of the second duct part 105b, which end portion extends into the drainage container 106 and ends inside the drainage container 106. The pipe portion 114 projects from the inside surface 115 into the drainage container 6 and constitutes a collar extending around the outlet opening.

As further appears from the partly cut view in Fig. 3A, the pipe portion 114' arranged at the inlet 107 inside the drainage container 106 encloses the inlet 107, i.e. the pipe portion 114' extends circumferentially around the inlet. The pipe portion 114' is the end portion of the first duct part 105a, which end portion extends into the drainage container 106 and ends inside the drainage container 106. The pipe portion 114' projects from the inside surface 115 into the drainage container 6 and constitutes a collar extending around the inlet opening.

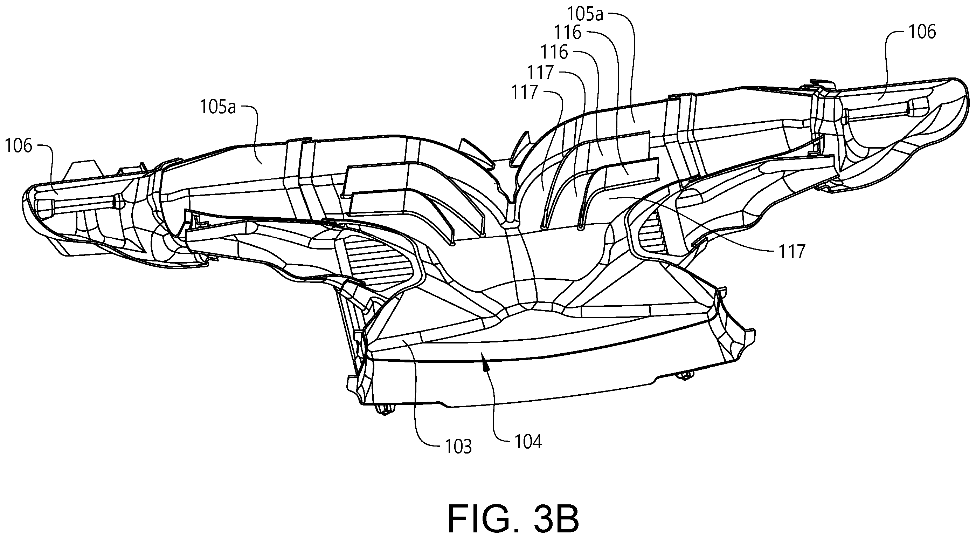

Fig. 3B is a cut view from below of the air intake device 101 illustrated in Fig. 3A. Fig. 3B shows the inside of each first duct part 105a connecting the collector component 103 and the respective drainage container 106.

The first duct part 105a suitably has at least one internal guiding vane 116 arranged to counteract swirling of the air before entering the drainage container 106. Preferably, said at least one guiding vane 116 extends in a longitudinal direction of the first duct part 105a and divides the first duct part 105a into a plurality of longitudinal air channels 117. In the example embodiment illustrated in Figs. 3A and 3B, each first duct part 105a has two guiding vanes 116 providing three air channels 117. The guiding vanes 116 can also be used for initially dividing the main airflow reaching the collector component 103 into a first sub airflow directed to one of the drainage containers and second sub airflow directed to the other of the drainage containers.

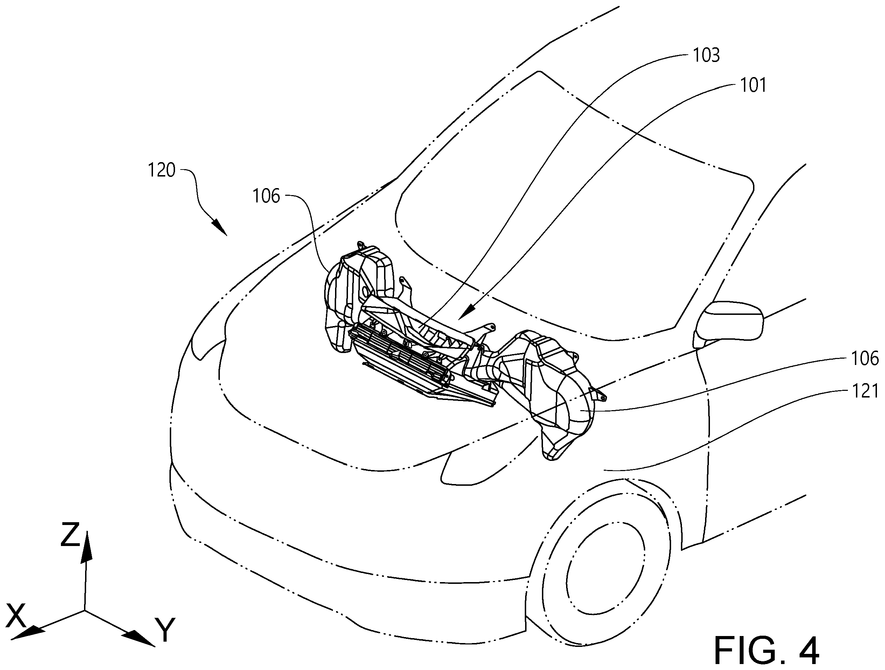

Fig. 4 shows a vehicle 120 comprising an air intake device 101. For example, the air intake device 101 can be the same as illustrated in Fig. 3A, where each drainage container 106 is arranged at a respective side of the vehicle 120 for drainage of water at a respective front wheel arch 121 of the vehicle 120.

When the air intake device 101 is arranged in a vehicle 120, the directions and axes used in the cartesian coordinate system, i.e. the X-axis, Y-axis and the Z-axis, are arranged relative to the vehicle 120 such that the X-axis is a horizontal axis in parallel with the longitudinal extension direction or normal driving direction of the vehicle 120, the Y-axis is a horizontal axis in parallel with the lateral extension of the vehicle 120, and the Z-axis is a vertical axis.

It is to be understood that the present invention is not limited to the embodiments described above and illustrated in the drawings; rather, the skilled person will recognize that many changes and modifications may be made within the scope of the appended claims.

## Claims

1. An air intake device (1; 101) for providing air to an air conditioning system (2; 102) of a vehicle (120), the air intake device comprising a collecting component (3; 103) with an opening (4; 104) for receiving air, a duct (5; 105) arranged for transporting air from the collecting component to the air conditioning system, and a drainage container (6; 106), wherein the duct has a first duct part (5a; 105a) extending from the collecting component to an inlet (7; 107) of the drainage container, allowing air to flow from the collecting component and into the drainage container, and a second duct part (5; 105b) extending from an outlet (8; 108) of the drainage container to the air conditioning system, allowing air to flow out from the drainage container and to the air conditioning system, wherein the inlet (7; 107) and the outlet (8; 108) are arranged such that an airflow direction (9; 109) of the inlet and an airflow direction (10; 110) of the outlet form an angle α in the interval 90°≤α≤270° relative to each other thereby redirecting an airflow in the drainage container, wherein the angle α is defined such that for α=180° the airflow direction of the outlet is opposite to the airflow direction of the inlet, and **characterized in that** the outlet (8; 108) is arranged above the inlet (7; 107).

2. An air intake device according to claim 1, **characterized in that** the angle α is in the interval 140°<α<220°.

3. An air intake device according to claim 1, **characterized in that** the angle α is in the interval 160°<α<200°.

4. An air intake device according to claim 1, **characterized in that** the angle α is in the interval 170°<α<190°.

5. An air intake device according to claim 1, **characterized in that** the angle α is 180° and thereby the airflow direction (10; 110) of the outlet is opposite to the airflow direction (9; 109) of the inlet

6. An air intake device according to any preceding claim, **characterized in that** the air intake device (1; 101) has a pipe portion (14; 114) arranged at the outlet (8; 108) inside the drainage container (6; 106), which pipe portion (14; 114) encloses the outlet.

7. An air intake device according to claim 6, **characterized in that** the pipe portion (14; 114) is an end portion of the second duct part (5b; 105b), which end portion extends into the drainage container (6; 106) and ends inside the drainage container.

8. An air intake device according to any preceding claim, **characterized in that** the inlet (7; 107) and the outlet (8; 108) are arranged on one and the same side (13) of the drainage container (6; 106).

9. An air intake device according to any preceding claim, **characterized in that** the drainage container (6; 106) has a water drainage valve (11; 111) arranged in the bottom of the drainage container.

10. An air intake device according to any preceding claim, **characterized in that** the first duct part (105a) has at least one internal guiding vane (116) arranged to counteract swirling of the air before entering the drainage container (106).

11. An air intake device according to claim 10, **characterized in that** said at least one guiding vane (116) extends in a longitudinal direction of the first duct part (105a) and divides the first duct part into a plurality of longitudinal air channels (117).

12. An air intake device according to any preceding claim, **characterized in that** the air intake device (101) comprises two of said duct (105) arranged for transporting air from the collecting component (103) to the air conditioning system (102), and two of said drainage container (106).

13. A vehicle (120) comprising an air intake device (1; 101) according to any of claims 1-12.

14. A vehicle according to claim 13, the air intake device (101) comprising two of said duct (105) arranged for transporting air from the collecting component (103) to the air conditioning system (102), and two of said drainage container (106), wherein each drainage container is arranged at a respective side of the vehicle (120) for drainage of water at a respective front wheel arch (121) of the vehicle.

## Patentansprüche

1. Lufteinlassvorrichtung (1; 101) zum Bereitstellen von Luft an eine Klimaanlage (2; 102) eines Fahrzeugs (120), wobei die Lufteinlassvorrichtung eine Sammelkomponente (3; 103) mit einer Öffnung (4; 104) zum Aufnehmen von Luft, eine Leitung (5; 105), die zum Transportieren von Luft aus der Sammelkomponente zu der Klimaanlage angeordnet ist, und einen Drainagebehälter (6; 106) umfasst, wobei die Leitung einen ersten Leitungsteil (5a; 105a), der sich von der Sammelkomponente zu einem Einlass (7; 107) des Drainagebehälters erstreckt, wodurch ermöglicht wird, dass Luft aus der Sammelkomponente und in den Drainagebehälter strömt, und einen zweiten Leitungsteil (5; 105b), der sich von einem Auslass (8; 108) des Drainagebehälters zu der Klimaanlage erstreckt, wodurch ermöglicht wird, dass Luft aus dem Drainagebehälter und zu der Klimaanlage strömt, aufweist, wobei der Einlass (7; 107) und der Auslass (8; 108) derart angeordnet sind, dass eine Luftströmungsrichtung (9; 109) des Einlasses und eine Luftströmungsrichtung (10; 110) des Auslasses einen Winkel α im Intervall 90°≤α≤270° relativ zueinander bilden, wodurch eine Luftströmung in dem Drainagebehälter umgelenkt wird, wobei der Winkel α derart definiert ist, dass bei α=180° die Luftströmungsrichtung des Auslasses entgegengesetzt zu der Luftströmungsrichtung des Einlasses ist, und **dadurch gekennzeichnet, dass** der Auslass (8; 108) über dem Einlass (7; 107) angeordnet ist.

2. Lufteinlassvorrichtung nach Anspruch 1, **dadurch gekennzeichnet, dass** der Winkel α im Intervall 140°<α<220° liegt.

3. Lufteinlassvorrichtung nach Anspruch 1, **dadurch gekennzeichnet, dass** der Winkel α im Intervall 160°<α<200° liegt.

4. Lufteinlassvorrichtung nach Anspruch 1, **dadurch gekennzeichnet, dass** der Winkel α im Intervall 170°<α<190° liegt.

5. Lufteinlassvorrichtung nach Anspruch 1, **dadurch gekennzeichnet, dass** der Winkel α 180° beträgt und dadurch die Luftströmungsrichtung (10; 110) des Auslasses entgegengesetzt zu der Luftströmungsrichtung (9; 109) des Einlasses ist.

6. Lufteinlassvorrichtung nach einem der vorhergehenden Ansprüche, **dadurch gekennzeichnet, dass** die Lufteinlassvorrichtung (1; 101) einen Rohrabschnitt (14; 114) aufweist, der an dem Auslass (8; 108) innerhalb des Drainagebehälters (6; 106) angeordnet ist, wobei der Rohrabschnitt (14; 114) den Auslass umschließt.

7. Lufteinlassvorrichtung nach Anspruch 6, **dadurch gekennzeichnet, dass** der Rohrabschnitt (14; 114) ein Endabschnitt des zweiten Leitungsteils (5b; 105b) ist, wobei sich der Endabschnitt in den Drainagebehälter (6; 106) erstreckt und innerhalb des Drainagebehälters endet.

8. Lufteinlassvorrichtung nach einem der vorhergehenden Ansprüche, **dadurch gekennzeichnet, dass** der Einlass (7; 107) und der Auslass (8; 108) auf derselben Seite (13) des Drainagebehälters (6; 106) angeordnet sind.

9. Lufteinlassvorrichtung nach einem der vorhergehenden Ansprüche, **dadurch gekennzeichnet, dass** der Drainagebehälter (6; 106) ein Wasserdrainageventil (11; 111) aufweist, das in dem Boden des Drainagebehälters angeordnet ist.

10. Lufteinlassvorrichtung nach einem der vorhergehenden Ansprüche, **dadurch gekennzeichnet, dass** der erste Leitungsteil (105a) mindestens eine innere Leitschaufel (116) aufweist, die derart angeordnet ist, dass sie dem Verwirbeln der Luft entgegenwirkt, bevor sie in den Drainagebehälter (106) fließt.

11. Lufteinlassvorrichtung nach Anspruch 10, **dadurch gekennzeichnet, dass** sich die mindestens eine Leitschaufel (116) in einer Längsrichtung des ersten Leitungsteils (105a) erstreckt und den ersten Leitungsteil in eine Vielzahl von länglichen Luftkanälen (117) unterteilt.

12. Lufteinlassvorrichtung nach einem der vorhergehenden Ansprüche, **dadurch gekennzeichnet, dass** die Lufteinlassvorrichtung (101) zwei der Leitungen (105), die zum Transportieren von Luft aus der Sammelkomponente (103) zu der Klimaanlage (102) angeordnet sind, und zwei der Drainagebehälter (106) umfasst.

13. Fahrzeug (120), umfassend eine Lufteinlassvorrichtung (1; 101) nach einem der Ansprüche 1-12.

14. Fahrzeug nach Anspruch 13, wobei die Lufteinlassvorrichtung (101) zwei der Leitungen (105), die zum Transportieren von Luft aus der Sammelkomponente (103) zu der Klimaanlage (102) angeordnet sind, und zwei der Drainagebehälter (106) umfasst, wobei jeder Drainagebehälter an einer jeweiligen Seite des Fahrzeugs (120) zur Drainage von Wasser an einem jeweiligen vorderen Radkasten (121) des Fahrzeugs angeordnet ist.

## Revendications

1. Dispositif d'admission d'air (1 ; 101) pour fournir de l'air à un système de climatisation (2 ; 102) d'un véhicule (120), le dispositif d'admission d'air comprenant un composant collecteur (3 ; 103) avec une ouverture (4 ; 104) pour la réception d'air, un conduit (5 ; 105) agencé pour transporter l'air à partir du composant collecteur vers le système de climatisation, et un récipient de drainage (6 ; 106), dans lequel le conduit présente une première partie de conduit (5a ; 105a) s'étendant à partir du composant collecteur vers une entrée (7 ; 107) du récipient de drainage, permettant à l'air de s'écouler à partir du composant collecteur et jusque dans le récipient de drainage, et une seconde partie de conduit (5b ; 105b) s'étendant à partir d'une sortie (8 ; 108) du récipient de drainage vers le système de climatisation, permettant à l'air de s'écouler hors du récipient de drainage et vers le système de climatisation, dans lequel l'entrée (7 ; 107) et la sortie (8 ; 108) sont agencées de sorte qu'une direction de flux d'air (9 ; 109) de l'entrée et une direction de flux d'air (10 ; 110) de la sortie forment un angle α dans l'intervalle 90°≤α≤270° l'une par rapport à l'autre, redirigeant ainsi un flux d'air dans le récipient de drainage, dans lequel l'angle α est défini de sorte que pour α=180°, la direction de flux d'air de la sortie est opposée à la direction de flux d'air de l'entrée, et **caractérisé en ce que** la sortie (8 ; 108) est agencée au-dessus de l'entrée (7 ; 107).

2. Dispositif d'admission d'air selon la revendication 1, **caractérisé en ce que** l'angle α est dans l'intervalle 140°<α<220°.

3. Dispositif d'admission d'air selon la revendication 1, **caractérisé en ce que** l'angle α est dans l'intervalle 160°<α<200°.

4. Dispositif d'admission d'air selon la revendication 1, **caractérisé en ce que** l'angle α est dans l'intervalle 170°<α<190°.

5. Dispositif d'admission d'air selon la revendication 1, **caractérisé en ce que** l'angle α est de 180° et ainsi la direction de flux d'air (10 ; 110) de la sortie est opposée à la direction de flux d'air (9 ; 109) de l'entrée.

6. Dispositif d'admission d'air selon l'une quelconque des revendications précédentes, **caractérisé en ce que** le dispositif d'admission d'air (1 ; 101) présente une partie de tuyau (14 ; 114) agencée au niveau de la sortie (8 ; 108) à l'intérieur du récipient de drainage (6 ; 106), laquelle partie de tuyau (14 ; 114) entoure la sortie.

7. Dispositif d'admission d'air selon la revendication 6, **caractérisé en ce que** la partie de tuyau (14 ; 114) est une partie d'extrémité de la seconde partie de conduit (5b ; 105b), laquelle partie d'extrémité s'étend dans le récipient de drainage (6 ; 106) et se termine à l'intérieur du récipient de drainage.

8. Dispositif d'admission d'air selon l'une quelconque des revendications précédentes, **caractérisé en ce que** l'entrée (7 ; 107) et la sortie (8 ; 108) sont agencées sur un seul et même côté (13) du récipient de drainage (6 ; 106).

9. Dispositif d'admission d'air selon l'une quelconque des revendications précédentes, **caractérisé en ce que** le récipient de drainage (6 ; 106) présente une soupape de drainage d'eau (11 ; 111) agencée dans le fond du récipient de drainage.

10. Dispositif d'admission d'air selon l'une quelconque des revendications précédentes, **caractérisé en ce que** la première partie de conduit (105a) présente au moins une aube de guidage interne (116) agencée pour contrer le tourbillonnement de l'air avant d'entrer dans le récipient de drainage (106).

11. Dispositif d'admission d'air selon la revendication 10, **caractérisé en ce que** ladite au moins une aube de guidage (116) s'étend dans une direction longitudinale de la première partie de conduit (105a) et divise la première partie de conduit en une pluralité de canaux d'air longitudinaux (117).

12. Dispositif d'admission d'air selon l'une quelconque des revendications précédentes, **caractérisé en ce que** le dispositif d'admission d'air (101) comprend deux desdits conduits (105) agencés pour transporter l'air à partir du composant collecteur (103) vers le système de climatisation (102), et deux desdits récipients de drainage (106).

13. Véhicule (120) comprenant un dispositif d'admission d'air (1 ; 101) selon l'une quelconque des revendications 1 à 12.

14. Véhicule selon la revendication 13, le dispositif d'admission d'air (101) comprenant deux desdits conduits (105) agencés pour transporter l'air à partir du composant collecteur (103) vers le système de climatisation (102), et deux desdits récipients de drainage (106), dans lequel chaque récipient de drainage est agencé au niveau d'un côté respectif du véhicule (120) pour le drainage d'eau au niveau d'un passage de roue avant (121) respectif du véhicule.
